# FASCICULE DE BREVET EUROPEEN

(11) **EP 2 125 840 B1**
(45) Date de publication et mention de la délivrance du brevet: **07.01.2015**
(21) Numéro de dépôt: 08701631.7
(22) Date de dépôt: 22.01.2008
(51) Int. Cl.: C07F 9/11

(54) **PROCEDE DE PREPARATION D'UNE SOLUTION D'UN ORGANOPHOSPHATE DE TERRE RARE**
VERFAHREN ZUR HERSTELLUNG EINER LÖSUNG EINES SELTENERDORGANOPHOSPHATS
METHOD FOR PREPARING A SOLUTION OF A RARE EARTH ORGANOPHOSPHATE

(30) Priorité: 23.01.2007 FR 0700444
(43) Date de publication de la demande: 02.12.2009
(73) Titulaire: Rhodia Opérations, 93306 Aubervilliers (FR)
(72) Inventeur: MATHIVET, Thomas, F-17230 Bourg Chapon (FR)
(74) Mandataire: Dubruc, Philippe
(86) Numéro de dépôt international: PCT/EP2008/050685
(87) Numéro de publication internationale: WO 2008/090141

(56) Documents cités:
- EP-A2- 0 924 214
- GB-A- 1 571 210
- US-A- 2 983 679
- US-A- 3 067 224
- US-B1- 6 544 442
- MORGAN ET AL: "The Dimethyl Phosphates of the Rare Earths" J. AM. CHEM. SOC, vol. 36, 1914, pages 10-16, XP002447559
- TSURUTA H ET AL: "Tandem mass spectrometric analysis of rare earth(III) complexes: evaluation of the relative strength of their Lewis acidity" TETRAHEDRON, ELSEVIER SCIENCE PUBLISHERS, AMSTERDAM, NL, vol. 59, no. 52, 22 décembre 2003 (2003-12-22), pages 10419-10438, XP004479982 ISSN: 0040-4020

## Description

La présente invention concerne un procédé de préparation d'une solution d'un organophosphate de terre rare dans un solvant organique.

Les solutions d'organophosphates de terre rare sont utilisées notamment en tant que matière première pour la préparation de catalyseurs pour la polymérisation des diènes. On connaît des procédés de préparation de ces solutions qui partent de solutions aqueuses de composés de terre rare et qui mettent en oeuvre une extraction liquide/liquide avec un solvant organique.

EP 924214 A2 décrit un procédé de préparation d'une solution de composés de terre rare dans lequel on mélange un composé de terre rare et un acide de Lewis dans un solvant organique.

L'article de Morgan et al. J. AM. Chem. Soc. , vol. 36, 1914, pp 10-16, décrit la préparation de phosphates de terre rare par dissolution d'oxydes de terre rare dans un acide phosphorique.

L'invention vise à fournir une alternative à ces types de procédé, c'est-à-dire notamment un procédé ne faisant pas intervenir d'extraction liquide/liquide et qui permet néanmoins d'obtenir une solution organique de qualité satisfaisante.

Dans ce but, le procédé de l'invention pour la préparation d'une solution d'un organophosphate, d'un organophosphonate ou d'un organophosphinate de terre rare dans un solvant organique, est caractérisé en ce qu'il comprend les étapes suivantes :
- on fait réagir à une température d'au moins 60°C avec un acide organophosphoré un composé de terre rare choisi parmi les oxydes, les hydroxydes, les acétates, les carboxylates, les carbonates et les bicarbonates de terre rare, en l'absence dudit solvant organique ou en présence d'une quantité de solvant d'au plus 50% de la quantité finale dudit solvant présent dans la solution;
- on ajoute la quantité restante de solvant au produit issu de la réaction de l'étape précédente.

Le procédé de l'invention est d'une mise en oeuvre simple et il conduit cependant à une solution de bonne pureté. On entend par là que cette solution présente une teneur en composé de terre rare de départ et une acidité résiduelle qui sont faibles et en tout cas suffisantes pour une utilisation ultérieure de la solution dans une préparation de catalyseurs. Ce procédé permet aussi d'avoir un bon rendement, voisin de, ou égal à 100%.

D'autres caractéristiques, détails et avantages de l'invention apparaîtront encore plus complètement à la lecture de la description qui va suivre, ainsi que des divers exemples concrets mais non limitatifs destinés à l'illustrer.

Par terre rare on entend pour la suite de la description les éléments du groupe constitué par l'yttrium et les éléments de la classification périodique de numéro atomique compris inclusivement entre 57 et 71.

Le procédé de l'invention s'applique tout particulièrement à la préparation d'un organophosphate d'une terre rare choisie parmi le néodyme, le lanthane, le praséodyme et le cérium.

La première étape du procédé de l'invention consiste à faire réagir un composé de terre rare du type décrit plus haut avec un acide organophosphoré.

Comme composés de terre rare on utilise ceux qui ont été mentionnés plus haut. Dans le cas des carboxylates, ceux-ci sont choisis plus particulièrement parmi les composés de 1 à 5 atomes de carbone. On peut citer notamment les acétates, les propionates et les formiates.

Parmi l'ensemble des composés de terre rare mentionnés, on peut utiliser plus particulièrement les oxydes et les hydroxydes:

L'acide organophosphoré peut être plus particulièrement choisi parmi les monoesters ou les diesters d'acide phosphorique de formule respective (RO)PO(OH)₂ et (RO)(R'O)PO(OH) dans lesquelles R et R', identiques ou différents, représentent des radicaux alkyle ou aryle.

A titre d'exemple R et R' peuvent être des radicaux n-butyle, isobutyle, pentyle, amyle, isopentyle, 2,2-diméthylhexyle, 2-éthylhexyle, 1-éthylhéxyle, octyle, nonyle, décyle, 2-2 diméthyloctyle, tolyle, nonaphényle.

L'acide organophosphoré peut aussi être choisi parmi les acides phosphoniques de formules générales (RO)R'P(O)(OH) et RP(O)(OH)₂ dans lesquelles R et R', identiques ou différents, représentent des radicaux alkyle ou aryle. A titre d'exemple R et R' peuvent être des radicaux n-butyle, isobutyle, pentyle, amyle, isopentyle, 2,2- diméthylhexyle, 2- éthylhexyle, 1-éthylhexylé, octyle, nonyle, décyle, 2-2 diméthyloctyle, tolyle, nonaphényle.

L'acide organophosphoré peut encore être choisi parmi les acides phosphiniques de formules générales R(R')P(O)OH et R(H)P(O)OH dans lesquelles R et R', identiques ou différents, représentent des radicaux alkyle ou aryle. A titre d'exemple R et R' peuvent être des radicaux n-butyle, isobutyle, pentyle, amyle, isopentyle, 2,2- diméthylhexyle, 2- éthylhexyle, 1-éthylhexyle, octyle, nonyle, décyle, 2-2 diméthyloctyle, tolyle, nonaphényle.

On peut bien entendu utiliser des mélanges des acides organophosphorés décrits ci-dessus.

La réaction du composé de terre rare avec l'acide organophosphoré se fait généralement à une température d'au moins 60°C, plus particulièrement comprise entre 80°C et 100°C. Des températures supérieures à 100°C sont envisageables néanmoins.

La durée de cette attaque peut varier dans de larges limites par exemple entre 2 et 6 heures.

Selon une caractéristique importante de l'invention, la première étape du procédé est conduite en présence d'une quantité de solvant organique qui est d'au plus 50% de la quantité finale de solvant qui sera présente dans la solution que l'on cherche à obtenir. Plus particulièrement, cette quantité de solvant présente lors de la première étape est d'au plus 30%, notamment d'au plus 20% et encore plus particulièrement d'au plus 10% de la quantité totale.

Selon un mode de réalisation préféré de l'invention, la quantité de solvant présente à la première étape est nulle, cette première étape étant alors conduite en l'absence de solvant.

La seconde étape du procédé consiste donc à ajouter la quantité restante de solvant au produit issu de l'étape précédente. Dans le cas du mode de réalisation où la première étape est conduite en l'absence de tout solvant, celui-ci est alors introduit en totalité dans la seconde étape.

Le solvant organique utilisé est généralement un solvant hydrocarboné, plus particulièrement un solvant aliphatique, cycloaliphatique voire aromatique.

Ce solvant peut être choisi dans le groupe comprenant l'hexane, le cyclohexane, le méthylcyclohexane, l'heptane, le méthylpentane, le méthylcyclopentane, le pentane, le 3-méthylpentane, le 2-méthylpentane, le 2,3-diméthylpentane et leurs isomères, le toluène et les xylènes et les mélanges de ceux-ci. On préfère l'hexane, le cyclohexane, le méthylcyclohexane leurs isomères et leurs mélanges. Les solvants hydrocarbonés disponibles dans le commerce sont les hexanes EXXSOL® fournis par Exxon, l'heptane EXXSOL® fourni par Exxon, les ISOPAR®, ISOPAR-M® et ISOPAR-L® fournis par Exxon, le SOLVENT 140® fourni par Exxon, le MINERAL SPIRITS 66® fournis par Philips, le cyclohexane fourni par BASF et le méthylcyclohexane fourni par Total Fluides.

Au l'issue de l'addition du solvant, on obtient une solution d'organophosphate de terre rare. Cette solution peut être éventuellement soumise à une distillation pour éliminer l'eau résiduelle. Il est possible de cette manière d'obtenir une solution dont la teneur en eau soit d'au plus 500 ppm, plus particulièrement d'au plus 100 ppm. Cette teneur en eau, exprimée par le rapport molaire eau/terre rare, peut être d'au plus 0,2, plus particulièrement d'au plus 0,04.

L'acidité résiduelle, exprimée par le rapport molaire acide organophosphoré/terre rare, est d'au plus 0,5, plus particulièrement d'au plus 0,3.

Le rendement de la réaction est élevé dans la mesure où il ne reste en solution qu'une très faible quantité de composé de terre rare de départ. La solution présente en effet un aspect limpide.

Il est possible d'ajuster la viscosité de la solution obtenue en y ajoutant un composé choisi parmi les alcools, les acides carboxyliques ou les acides phosphoriques. A titre d'exemples non limitatifs, on peut citer l'éthanol, l'éthylène glycol, le propylène glycol, le dipropylène glycol, l'acide acétique, l'acide propionique.

Comme indiqué plus haut les solutions d'organophosphate de terre rare issues du procédé de l'invention peuvent être utilisées pour la préparation de catalyseurs pour la polymérisation des diènes comme le butadiène et l'isoprène.

Des exemples vont maintenant être donnés.

### Exemple 1 comparatif

Dans un réacteur préalablement inerté à l'argon, on introduit 3,03 g d'oxyde de néodyme et 16,25 g d'acide di(2-éthylhexyl)phosphorique (DEHPA) et 80 g de méthylcyclohexane (MCH). Le mélange est ensuite porté à 90°C pendant 2 heures. L'azéotrope eau/MCH est ensuite distillé avec un montage type Dean-Stark. Une solution de néodyme di(2-éthylhexyl)phosphate dans le MCH est ainsi obtenue. Elle se caractérise par une apparence très trouble due à la présence abondante de Nd₂O₃ résiduel, une teneur en néodyme en solution de 1,6%, une acidité libre résiduelle exprimée en pourcentage en poids de DEHPA de 2,5% et une teneur en eau de 400 ppm. Dans ce cas, les ratios molaires sont les suivants DEHPA/Nd = 0,70 et eau/Nd = 0,20. Le rendement d'attaque est de 70%.

### Exemple 2

Dans un réacteur préalablement inerté à l'argon, on introduit 3,03 g d'oxyde de néodyme, 17,8 g de DEHPA et 8,08 g de MCH. Le mélange est ensuite porté à 90°C pendant 2 heures. 77,27 g de MCH sont ensuite ajoutés et l'eau issue de la réaction est éliminée par distillation de l'azéotrope eau/MCH avec un montage type Dean-Stark. Une solution limpide de néodyme di(2-éthylhexyl)phosphate dans le MCH est ainsi obtenue. Elle se caractérise par une apparence limpide, une teneur en néodyme de 2,2%, une acidité libre résiduelle exprimée en pourcentage en poids de DEHPA de 1,7% et une teneur en eau de 90 ppm. Dans ce cas, les ratios molaires sont les suivants DEHPA/Nd = 0,35 et eau/Nd = 0,03. Le rendement d'attaque est de 100%.

### Exemple 3

Dans un réacteur préalablement inerté à l'argon, on introduit 4,09 g d'hydroxyde de néodyme à 63,46% en poids en Nd, 17,8 g de DEHPA et 6,41 g de MCH. Le mélange est ensuite porté à 90°C pendant 1 heure, puis à 120°C pendant 3 heures. On ajoute ensuite 74,55 g de MCH et on poursuit le chauffage à 140°C pendant 3 heures. L'azéotrope eau/MCH est ensuite distillé avec un montage type Dean-Stark. Une solution de néodyme di(2-éthylhexyl)phosphate dans le MCH est ainsi obtenue. Elle se caractérise par une apparence limpide, une teneur en néodyme de 2,4%, une acidité libre résiduelle exprimée en pourcentage en poids de DEHPA de 1,9% et une teneur en eau de 304 ppm. Dans ce cas, les ratios molaires sont les suivants DEHPA/Nd = 0,35 et eau/Nd = 0,10. Le rendement d'attaque est de 96%.

### Exemple 4

Dans une réacteur préalablement inerté à l'argon, on introduit 5,79 g d'acétate de néodyme et 17,39 g de DEHPA. Le mélange est ensuite porté à 90°C pendant 1 heure, puis on ajoute 7,31 g de MCH et on porte ce mélange à 120°C pendant 1 heure. 140,9 g de MCH sont ensuite ajoutés au mélange puis l'azéotrope eau/MCH subit ensuite une distillation flash. 28,05 g d'un mélange eau/MCH/acide acétique est ainsi éliminé du produit. Une solution de néodyme di(2-éthylhexyl)phosphate dans le MCH est ainsi obtenue. Elle se caractérise par une apparence limpide, une teneur en néodyme de 1,7%, une acidité libre résiduelle exprimée en pourcentage en poids de DEHPA de 1,1% et une teneur en eau de 96 ppm. Dans ce cas, les ratios molaires sont les suivants DEHPA/Nd = 0,29 et eau/Nd = 0,04. Le rendement d'attaque est de 100%.

## Revendications

1. Procédé de préparation d'une solution organique mettant en oeuvre la réaction d'un acide organophosphoré choisi parmi les monoesters ou les diesters de l'acide phosphorique, les acides phosphoniques et les acides phosphiniques avec un composé de terre rare choisi parmi les oxydes, les hydroxydes, les acétates, les carboxylates, les carbonates et les bicarbonates de terre rare, **caractérisé en ce qu'**il comprend les étapes suivantes :
- on conduit ladite réaction à une température d'au moins 60°C, en l'absence de solvant organique ou en présence d'une quantité de solvant d'au plus 50% de la quantité finale dudit solvant présent dans la solution;
- on ajoute la quantité restante de solvant au produit issu de la réaction de l'étape précédente ce par quoi on obtient une solution d'organophosphate de terre rare;
- on soumet cette solution à une distillation pour éliminer l'eau résiduelle.

2. Procédé selon la revendication 1, **caractérisé en ce qu'**on utilise un solvant hydrocarboné, plus particulièrement un solvant aliphatique ou cycloaliphatique.

3. Procédé selon l'une des revendications précédentes, **caractérisé en ce que** la terre rare est choisie parmi le néodyme, le lanthane, le praséodyme et le cérium.

4. Procédé selon l'une des revendications précédentes, **caractérisé en ce qu'**on conduit la réaction du composé de terre rare avec l'acide organophosphoré à une température comprise entre 80°C et 100°C.

5. Procédé selon l'une des revendications précédentes, **caractérisé en ce qu'**on ajoute la totalité du solvant dans la seconde étape.

6. Procédé selon l'une des revendications précédentes, **caractérisé en ce que** le composé de terre rare est choisi parmi les carboxylates de 1 à 5 atomes de carbone.

7. Procédé selon l'une des revendications précédentes, **caractérisé en ce que** la première étape du procédé est conduite en présence d'une quantité de solvant organique qui est d'au plus d'au plus 30%, plus particulièrement d'au plus 20% de la quantité totale.

8. Procédé selon l'une des revendications précédentes, **caractérisé en ce que** la première étape du procédé est conduite en présence d'une quantité de solvant organique qui est d'au plus 10% de la quantité totale.

## Patentansprüche

1. Verfahren zur Herstellung einer organischen Lösung unter Verwendung der Reaktion einer aus Monoestern oder Diestern von Phosphorsäure, Phosphonsäuren und Phosphinsäuren ausgewählten Organophosphorsäure mit einer aus Seltenerdmetalloxiden, -hydroxiden, -acetaten, -carboxylaten, -carbonaten und -hydrogencarbonaten ausgewählten Seltenerdmetallverbindung, **dadurch gekennzeichnet, dass** es die folgenden Schritte umfasst:
- man führt die Reaktion bei einer Temperatur von mindestens 60°C in Abwesenheit von organischem Lösungsmittel oder in Gegenwart einer Lösungsmittelmenge von höchstens 50% der Endmenge des Lösungsmittels in der Lösung durch;
- man gibt die restliche Lösungsmittelmenge zu dem Produkt aus der Reaktion des vorhergehenden Schritts, wodurch man eine Seltenerdmetallorganophosphatlösung erhält;
- man unterwirft diese Lösung einer Destillation zur Entfernung von Wasserresten.

2. Verfahren nach Anspruch 1, **dadurch gekennzeichnet, dass** man ein Kohlenwasserstoff-Lösungsmittel, spezieller ein aliphatisches oder cycloaliphatisches Lösungsmittel, verwendet.

3. Verfahren nach einem der vorhergehenden Ansprüche, **dadurch gekennzeichnet, dass** man das Seltenerdmetall aus Neodym, Lanthan, Praseodym und Cer auswählt.

4. Verfahren nach einem der vorhergehenden Ansprüche, **dadurch gekennzeichnet, dass** man die Reaktion der Seltenerdmetallverbindung mit der Organophosphorsäure bei der Temperatur zwischen 80°C und 100°C durchführt.

5. Verfahren nach einem der vorhergehenden Ansprüche, **dadurch gekennzeichnet, dass** man die Gesamtmenge des Lösungsmittels im zweiten Schritt zugibt.

6. Verfahren nach einem der vorhergehenden Ansprüche, **dadurch gekennzeichnet, dass** man die Seltenerdmetallverbindung aus Carboxylaten mit 1 bis 5 Kohlenstoffatomen auswählt.

7. Verfahren nach einem der vorhergehenden Ansprüche, **dadurch gekennzeichnet, dass** man den ersten Schritt des Verfahrens in Gegenwart einer Menge von organischem Lösungsmittel, die höchstens 30% und spezieller höchstens 20% der Gesamtmenge beträgt, durchführt.

8. Verfahren nach einem der vorhergehenden Ansprüche, **dadurch gekennzeichnet, dass** man den ersten Schritt des Verfahrens in Gegenwart einer Menge von organischem Lösungsmittel, die höchstens 10% der Gesamtmenge beträgt, durchführt.

## Claims

1. Process for the preparation of an organic solution employing the reaction of an organophosphorus acid chosen from monoesters or diesters of phosphoric acid, phosphonic acids and phosphinic acids with a rare earth metal compound chosen from rare earth metal oxides, hydroxides, acetates, carboxylates, carbonates and bicarbonates, **characterized in that** it comprises the following stages:
- the said reaction is carried out at a temperature of at least 60°C, in the absence of organic solvent or in the presence of an amount of solvent of at most 50% of the final amount of the said solvent present in the solution;
- the remaining amount of solvent is added to the product resulting from the reaction of the preceding stage, whereby a solution of rare earth metal organophosphate is obtained;
- this solution is subjected to a distillation in order to remove the residual water.

2. Process according to Claim 1, **characterized in that** use is made of a hydrocarbon solvent, more particularly an aliphatic or cycloaliphatic solvent.

3. Process according to either of the preceding claims, **characterized in that** the rare earth metal is chosen from neodymium, lanthanum, praseodymium and cerium.

4. Process according to one of the preceding claims, **characterized in that** the reaction of the rare earth metal compound with the organophosphorus acid is carried out at a temperature of between 80°C and 100°C.

5. Process according to one of the preceding claims, **characterized in that** all of the solvent is added in the second stage.

6. Process according to one of the preceding claims, **characterized in that** the rare earth metal compound is chosen from carboxylates of 1 to 5 carbon atoms.

7. Process according to one of the preceding claims, **characterized in that** the first stage of the process is carried out in the presence of an amount of organic solvent which is at most 30%, more particularly at most 20%, of the total amount.

8. Process according to one of the preceding claims, **characterized in that** the first stage of the process is carried out in the presence of an amount of organic solvent which is at most 10% of the total amount.
